# EUROPÄISCHE PATENTSCHRIFT

(11) **EP 1 899 773 B1**
(45) Veröffentlichungstag und Bekanntmachung des Hinweises auf die Patenterteilung: **27.06.2018**
(21) Anmeldenummer: 06777508.0
(22) Anmeldetag: 29.06.2006
(51) Int. Cl.: G05B 19/05

(54) **VERFAHREN ZUR BESTIMMUNG DER BEARBEITUNGSREIHENFOLGE VON BAUSTEINEN EINES FUNKTIONSPLANS SOWIE ELEKTRONISCHE DATENVERARBEITUNGSANLAGE ZUR DURCHFÜHRUNG DES VERFAHRENS**
METHOD FOR DETERMINATION OF THE PROCESSING SEQUENCE OF COMPONENTS OF A FUNCTION PLAN AND ELECTRONIC DATA PROCESSING UNIT FOR CARRYING OUT SAID METHOD
PROCEDE POUR DETERMINER LA SEQUENCE DE TRAITEMENT DE MODULES D'UN SCHEMA LOGIQUE ET INSTALLATION DE TRAITEMENT DE DONNEES ELECTRONIQUE PERMETTANT DE METTRE EN OEUVRE CE PROCEDE

(30) Priorität: 01.07.2005 DE 102005031246
(43) Veröffentlichungstag der Anmeldung: 19.03.2008
(73) Patentinhaber: Siemens Aktiengesellschaft, 80333 München (DE)
(72) Erfinder: DREBINGER, Andreas, 91074 Herzogenaurach (DE)
(86) Internationale Anmeldenummer: PCT/EP2006/063681
(87) Internationale Veröffentlichungsnummer: WO 2007/003573

(56) Entgegenhaltungen:
- WO-A-99/34302
- WO-A2-2004/072744
- DE-A1- 4 230 178

## Beschreibung

Die Erfindung betrifft ein Verfahren zur Bestimmung der Bearbeitungsreihenfolge von Bausteinen eines Funktionsplans für ein sequentiell arbeitendes Automatisierungssystem gemäß dem Oberbegriff des Anspruchs 1. Ein derartiges Verfahren ist beispielsweise aus der WO 99/34302 A bekannt. Ein ähnliches Verfahren ist aus der WO 2004/072744 A2 bekannt.

Die Erfindung betrifft weiterhin eine zur Durchführung des Verfahrens geeignete elektronische Datenverarbeitungsanlage. Die Projektierung von leittechnischen Funktionen eines Automatisierungssystems basiert häufig auf graphischen Funktionsplänen, in denen die erforderlichen Automatisierungsfunktionen in Form graphischer Funktionsblöcke platziert, parametriert und miteinander verschaltet werden. Ein derartiger Funktionsplan kann beispielsweise gemäß der Industrienorm IEC 61131-3 gestaltet sein. Die Funktionsblöcke, die auch als Funktionsbausteine oder einfach nur als Bausteine bezeichnet werden, weisen in der Regel einen oder mehrere Eingänge und/oder Ausgänge auf. An den Eingängen werden üblicherweise die Ausgangssignale von anderen, vorgeschalteten Bausteinen des Funktionsplans eingelesen. Neben derartigen "internen" Eingängen gibt es häufig auch noch externe Eingänge, an denen in planübergreifender Weise von Bausteinen eines anderen Funktionsplans bereitgestellte Signale eingelesen werden, sowie solche Eingänge, die zum Einlesen eines unmittelbar aus dem zu überwachenden oder zu steuernden Prozess entnommenen oder ausgelesenen Signals (Prozesssignal) bestimmt sind. Schließlich können auch noch Bausteine mit fest parametrierten Eingangsports vorgesehen sein, welche keine Eingangsverbindung aufweisen. Gemäß dem grundlegenden Prinzip "Eingabe - Verarbeitung - Ausgabe" werden in einem Baustein die Eingangssignale verarbeitet und die resultierenden Ergebnisse an den Ausgängen zur Verfügung gestellt. Da die in den Bausteinen verarbeiteten Signale normalerweise logische Signale und keine physikalischen Größen darstellen, können innerhalb eines Funktionsplans auch isolierte Bausteine oder so genannte Endbausteine ohne Ausgänge existieren. Andere Ausgänge wiederum können externe bzw. planübergreifende Ausgänge des Funktionsplans sein.

Jeder der von einem Funktionsbaustein repräsentierten Automatisierungsfunktionen ist üblicherweise eine entsprechende Software-Routine zugeordnet, die beispielsweise als auf einer Zielplattform ablauffähiger Software-Code in einer Programmbibliothek hinterlegt sein kann oder auch dynamisch in einem Interpreter oder dergleichen erzeugt werden kann. Die Ausführung und Bearbeitung der den einzelnen Bausteinen entsprechenden Programm-Routinen auf der Zielplattform des Automatisierungssystems erfolgt in der Regel sequentiell in einem festen Zeittakt, wobei nach Bearbeitung aller zu einer Ablaufgruppe bzw. zu einem Funktionsplan gehörigen Bausteine die Bearbeitung nach einer bestimmten Wartezeit erneut beginnt. Dabei ist es insbesondere bei größeren Funktionsplänen mit einer großen Anzahl von Bausteinen und Rückkopplungen von Bedeutung, die Bearbeitungsreihenfolge der Bausteine derart zu wählen, dass Zyklusverzögerungen bzw. Tot-Zeiten in den Signalverläufen vermieden oder zumindest minimiert werden. Dadurch soll eine möglichst zeitnahe Reaktion der Automatisierung auf den zugrunde liegenden Prozess gewährleistet sein. Mit einem Zyklusverzug bezeichnet man die Situation, dass ein signalseitig nachverschalteter Baustein vor dem signalerzeugenden Baustein selbst ausgeführt wird und somit das Signal des vorherigen Zyklus am Bausteineingang ansteht und für die interne Berechnung verwendet wird. Ein derartiger Zyklusverzug oder Zyklusversatz, der insbesondere aus einer Rückkopplung von Signalen resultieren kann, führt letztendlich dazu, dass ein für die Bearbeitung einer Funktion erforderliches Signal erst bei der übernächsten Ausführung des Zyklus zur Verfügung steht bzw. dass der Baustein mit einem nicht aktuellen Signal arbeitet, das aus dem vorherigen Zyklus stammt. Hieraus resultiert eine um die Anzahl der Zyklusverzüge verzögerte Reaktion des Systems. Durch eine Erhöhung der Taktrate für die gesamte Verschaltung könnte zwar prinzipiell die Reaktionszeit wieder verkürzt werden, doch ist dies aus wirtschaftlichen Gründen meist nicht tragbar.

Da die gesamte Verschaltung aller Bausteine einer Automatisierungseinheit sehr komplex werden kann, sollte die Ablaufreihenfolge unter der Nebenbedingung, dass die Anzahl der Zyklusverzüge für eine hohe Effizienz der Automatisierung möglichst gering sein sollte, vorzugsweise automatisch ermittelt werden. Ein derartiges Verfahren zur automatischen Ermittlung der Bearbeitungsreihenfolge von Bausteinen eines Funktionsplans für ein sequentiell arbeitendes Automatisierungssystem ist beispielsweise aus der DE 42 30 178 A1 bekannt. Das dort beschriebene Verfahren, bei dem der Signalweg im Rahmen einer rekursiven Prozedur im Wesentlichen von einem Systemausgang - d. h. in der oben gewählten Sprechweise von einem externen (planübergreifenden) Ausgang - ausgehend zurückverfolgt wird, wobei den Endpunkten der jeweiligen Rückwärtspropagation in aufsteigender Reihenfolge Bearbeitungsfolgenummern zugeteilt werden, ist jedoch bei Funktionsplänen ohne Signalausgabe bzw. ohne planübergreifende Ausgangsverbindungen nicht anwendbar, da in diesem Fall die erforderlichen Voraussetzungen und Rahmenbedingungen fehlen.

Ein weiterer Nachteil der bisherigen Lösung macht sich insbesondere dann bemerkbar, falls der Funktionsplan für eine leichtere Nachvollziehbarkeit und Übersichtlichkeit oder aus sonstigen Gründen in mehrere Teilpläne segmentiert ist. Bei dem bereits bekannten Verfahren wird nämlich die Bearbeitungsreihenfolge der Teilpläne bei der Ermittlung der jeweiligen planinternen Bausteinreihenfolge nicht berücksichtigt. Zudem weist dieses Verfahren Performance-Probleme auf und arbeitet nicht streng deterministisch, da Eingänge eines Bausteins in beliebiger Reihenfolge abgefragt werden. Damit kann ein wiederholtes Ausführen des Verfahrens bei identisch verschalteten Funktionsplänen zu unterschiedlichen Ergebnissen führen.

Der Erfindung liegt daher die Aufgabe zugrunde, ein Verfahren der eingangs genannten Art anzugeben, das sich in möglichst universeller und reproduzierbarer Weise auf eine Vielzahl verschiedener Funktionspläne anwenden lässt und dabei die Reaktionszeit eines Automatisierungssystems auf Prozesssignale minimiert. Weiterhin soll eine zur Durchführung des Verfahrens geeignete elektronische Datenverarbeitungsanlage angegeben werden.

Bezüglich des Verfahrens wird die Aufgabe erfindungsgemäß durch die Merkmale des Anspruchs 1 gelöst.

Die Erfindung geht dabei von der Überlegung aus, dass das Verfahren zur Bestimmung der Bearbeitungsreihenfolge für eine möglichst universelle Anwendbarkeit auf eine große Klasse von Funktionsplänen weitgehend unabhängig von Randbedingungen wie z. B. dem Vorhandensein von externen (planübergreifenden) Ausgängen sein sollte. Weiterhin sollte die Bearbeitungsreihenfolge derart gewählt werden, dass bereits eindeutig bestimmte oder von vornherein feststehende Eingangssignale frühzeitig im System verwertet werden. Mit anderen Worten: Insbesondere bei Vorhandensein von Rückkopplungen sollten Bausteine mit bereits definierten Eingangszuständen möglichst früh abgearbeitet und somit mit einer niedrigen Bearbeitungsfolgenummer versehen werden, damit anstehende Prozesssignale frühzeitig in die Automatisierung einfließen und die Reaktionszeit verkürzen.

Zu diesem Zweck sollte eine vorwiegend graphisch orientierte Methode zum Einsatz kommen, die im Grundsatz vorwärtsgerichtet ist. Die Vergabe von Bearbeitungsfolgenummern oder Reihenfolgenummern sollte also entscheidend von der Vorwärtspropagation in Signalrichtung im Funktionsplan abhängen, wobei an Verzweigungspunkten, also Bausteinen mit mehreren Ausgängen, eindeutige Verzweigungsregeln zugrunde zu legen sind. Zur Realisierung eindeutiger und reproduzierbarer Propagationsregeln, die im Allgemeinen Verzweigungsregeln und Abbruchbedingungen für die Schrittfolgen in Vorwärts- und in Rückwärtsrichtung umfassen, sollten die Ausgänge der Bausteine jeweils in einer vorgegebenen Weise geordnet sein, wobei die geometrische Lage eines Ausgangs bzw. einer Ausgangsverbindung im Funktionsplan als Ordnungskriterium dienen kann. Zur Erzielung guter Performance-Eigenschaften beim Ablauf der Verfahrensschritte sollte überdies vermieden werden, dass eine Komponente (ein Baustein) mehrfach bearbeitet werden muss. In dieser Hinsicht ist erfindungsgemäß vorgesehen, die Reihenfolgenummern nicht in fortlaufender Reihenfolge zu vergeben, sondern ggf. eine temporär oder vorläufig vergebene Reihenfolge im Sinne eines iterativen Prozesses im Verlauf des Verfahrens auch noch einmal zu verändern und dabei zu verbessern. Derartige Iterationen werden anhand von Listenoperationen vorgenommen, wobei die Listenelemente durch die eindeutigen Bausteinkennungen gegeben sind, und wobei die Reihenfolge der Listenelemente je nach dem gerade durchgeführten Iterations- oder Rekursionsschritt eine vorläufige oder endgültige Bearbeitungsreihenfolge für die Bausteine des Funktionsplans repräsentiert.

Im Hinblick auf weitere erfindungswesentliche und vorteilhafte Ausgestaltungen des Verfahrens, insbesondere was die Propagationsregeln betrifft, wird auf die Merkmale des Anspruchs 1, auf die Unteransprüche sowie auf das Ausführungsbeispiel verwiesen. Die dabei maßgeblichen Prinzipien lassen sich wie folgt zusammenfassen: Bausteine, bei denen alle Eingangssignale bereits eindeutig definiert sind, können sofort behandelt werden. Ausgangspunkt sind hierbei insbesondere Bausteine, die ausschließliche parametrierte Eingangsports, sprich keine Eingangsverbindungen aufweisen, bzw. Bausteine, bei denen die Quellen aller Eingangsverbindungen in Plänen oder Plansegmenten lokalisiert sind, die aufgrund der Planreihenfolge bereits ausgeführt sind. Derartigen Bausteinen kann bereits vorab eine Reihenfolgenummer in aufsteigender Reihenfolge zugeordnet werden. Anschließend werden die Komponenten (die Bausteine) für die nachfolgende Rekursionsprozedur vorsortiert, wobei sie gemäß einer vorgegebenen Hierarchie von Ordnungs- und Vergleichskriterien nach absteigender Priorität geordnet werden. Schließlich werden die Bausteine in dieser Reihenfolge nacheinander abgearbeitet, wobei rekursiv über die Ausgangsverbindungen alle signalseitig nachgeschalteten Bausteine berücksichtigt werden. Die Signalverfolgung wird so lange fortgesetzt, bis entweder ein bereits verarbeiteter (d. h. im Verlauf der Propagation erreichter) Baustein angetroffen wird oder bis alle Bausteine des Funktionsplans verarbeitet worden sind. Zur besseren "Buchhaltung" über bereits verarbeitete Bausteine und zurückgelegte Pfade ist es vorteilhaft, jeden bereits erreichten Baustein und/oder jede bereits gewählte Ausgangsverbindung zu markieren.

Bei komplexeren Funktionsplänen, die der Übersichtlichkeit halber oder aus anderen Gründen in Teilpläne unterteilt sind, erfolgt die Ermittlung der Bausteinreihenfolge in zwei Phasen. In der ersten Phase wird die Reihenfolge der Teilpläne gemäß dem hier dargestellten Verfahren ermittelt, wobei die einzelnen Teilpläne wie Bausteine und die planübergreifenden Verbindungen analog zu Bausteinverbindungen behandelt werden. Die Gesamtheit der Funktionspläne kann somit wie ein virtueller Funktionsplan betrachtet werden, in dem jeder Plan in Form eines Bausteines repräsentiert ist. In der zweiten Phase wird die Reihenfolge der Bausteine jeweils innerhalb eines Teilplanes ermittelt.

Vorteilhafterweise wird das Verfahren von einer elektronischen Datenverarbeitungsanlage automatisiert durchgeführt. Dazu ist eine elektronische Datenverarbeitungsanlage mit einer Eingabeeinheit, einer Ausgabeeinheit und einer Verarbeitungseinheit vorgesehen, deren Komponenten für die Durchführung des Verfahrens ausgelegt sind. Vorteilhafterweise ist das Verfahren in einer Speichereinheit der elektronischen Datenverarbeitungsanlage als ausführbares Software-Programm hinterlegt. Als besonders vorteilhaft erweist es sich, wenn das Software-Programm in der Programmiersprache Java implementiert ist, da es auf diese Weise unmittelbar auf einer Vielzahl von Zielplattformen, für die ein Java-Interpreter oder eine so genannte virtuelle Maschine zur Verfügung steht, ablauffähig ist.

Die mit der Erfindung erzielten Vorteile bestehen insbesondere darin, dass ein Verfahren zur Ermittlung der Bearbeitungsreihenfolge von Bausteinen eines Funktionsplans bereitgestellt wird, mit dem nicht nur eine Minimierung von Zyklusverzügen erreicht wird, sondern bei dem durch die Priorisierung von prozesseinlesenden Bausteinen und von Bausteinen mit bereits festgelegten Eingangssignalen besonders kurze Reaktionszeiten auf Prozesssignale erreicht werden. Da das Verfahren weitestgehend unabhängig von Randbedingungen ist, lässt es sich in universeller Weise auf beliebige Funktionspläne anwenden. Auch bei komplexen Funktionsplänen, die in Teilpläne unterteilt sind, wird insbesondere durch die Berücksichtigung der Planreihenfolge bei der Ermittlung der planinternen Bearbeitungsreihenfolge eine optimierte Signalverarbeitung erreicht.

Ein Ausführungsbeispiel der Erfindung wird anhand einer Zeichnung näher erläutert. Darin zeigen:
- FIG 1 bis 5: aufeinander folgende Verfahrensschritte bei der Bestimmung der Bearbeitungsreihenfolge von Bausteinen eines Funktionsplans, wobei die ermittelte Reihenfolge in FIG 5 eingetragen ist, und
- FIG 6: die für denselben Funktionsplan unter Zugrundelegung alternativer Verzweigungsregeln ermittelte Reihenfolge.

Gleiche Teile sind in allen Figuren mit denselben Bezugszeichen versehen.

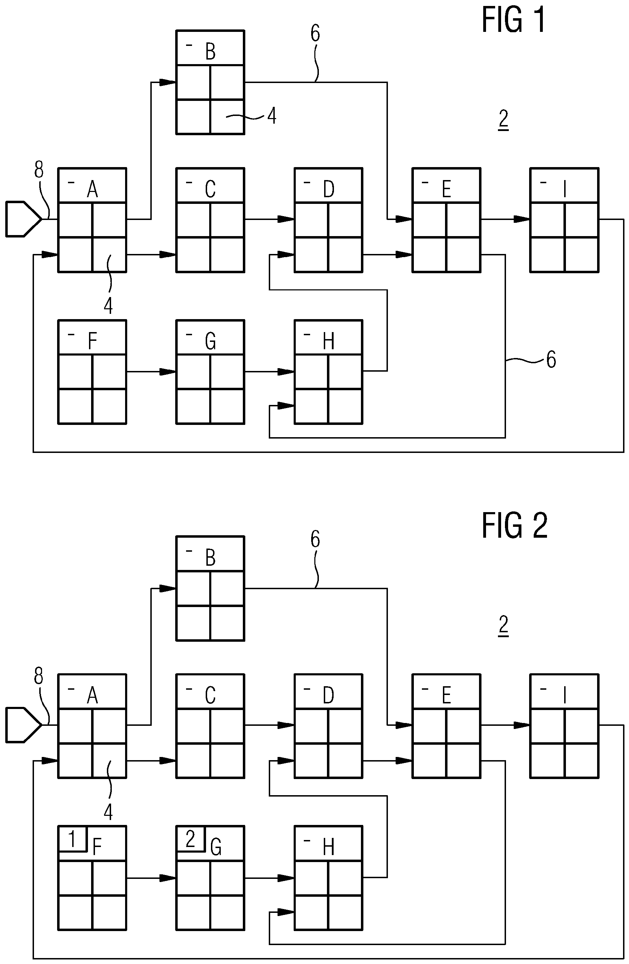

FIG 1 zeigt einen Funktionsplan 2 zur Projektierung einer leittechnischen Anlage oder eines Automatisierungssystems. Der Funktionsplan 2 ist modular aus einzelnen Funktionsbausteinen, kurz Bausteinen 4, zusammengesetzt, die jeweils eine Automatisierungsfunktion repräsentieren. Jedem Baustein 4 ist eine eindeutige Bausteinkennung A, B, ..., I zugeordnet, anhand der er identifiziert werden kann. Im vorliegenden Ausführungsbeispiel weist jeder Baustein 4 zumindest einen Eingang und einen Ausgang auf, wobei die Bausteine 4 vermöge von planinternen Bausteinverbindungen 6 signalseitig miteinander verknüpft sind. Die Eingänge sind jeweils am linken Rand der die Bausteine 4 darstellenden Kästchen angeordnet, die Ausgänge am rechten Rand. Die Verbindungen 6 zwischen den Bausteinen 4 sind in FIG 1 durch durchgezogene Linien dargestellt. Die Richtung des Signalflusses - jeweils von einem Ausgang eines Bausteins 4 zum Eingang eines anderen Bausteins 4 - wird dabei durch Richtungspfeile verdeutlicht.

Der Baustein A ist gegenüber den anderen Bausteinen B, ..., I insofern ausgezeichnet, als er neben einem planinternen Eingang einen planübergreifenden (externen) Eingang 8 aufweist, der sein Eingangssignal von einem anderen Funktionsplan erhält. Im Allgemeinen könnten auch noch so genannte prozesssignaleinlesende Eingänge vorgesehen sein, die eine Schnittstelle zu dem vom Automatisierungssystem zu überwachenden oder zu steuernden Prozess bzw. zu der zugrundeliegenden technischen Anlage darstellen. Der Baustein F weist keinerlei Eingangsverbindung auf, da seine hier nicht näher kenntlich gemachten Eingangsports so genannte parametrierte Eingangsports sind, bei denen das jeweilige Eingangssignal unabhängig von den Resultaten bzw. Ausgangssignalen der anderen Bausteine 4 vorgegeben ist.

Anhand des in FIG 1 gezeigten Funktionsplans 2 werden im Folgenden die Einzelschritte des Verfahrens detailliert dargelegt:

### I. Direkte Reihenfolgeermittlung

Im ersten Schritt werden alle Bausteine 4 ermittelt und markiert, die keine Eingangsverbindungen aufweisen bzw. bei denen alle Eingangssignale bereits vorhanden sind. Dies betrifft im Allgemeinen auch solche Signale, die von anderen (bereits verarbeiteten) Funktionsplänen ausgehen. Im Ausführungsbeispiel gemäß FIG 1 ist erkennbar, dass der Baustein F als einziger keine Eingangsverbindung aufweist. Ihm kann daher unmittelbar die Reihenfolgenummer 1 zugewiesen werden.

Damit ist auch das Ausgangssignal des Bausteins F festgelegt, wobei dieses Ausgangssignal zugleich das Eingangssignal für den dem Baustein F nachgeschalteten Baustein G darstellt. Daher kann der Baustein G in der Bearbeitungsreihenfolge unmittelbar nach dem Baustein F eingereiht werden. Er erhält damit die Reihenfolgenummer 2. Der Vorgang wird im Allgemeinen so lange fortgesetzt, bis kein weiterer Baustein auf diese Weise mehr verarbeitet werden kann. Beispielsweise kann dem dem Baustein G nachgeschalteten Baustein H keine Reihenfolgenummer unmittelbar zugeordnet werden, da er neben dem bereits signalmäßig festgelegten (oberen) Eingang noch einen weiteren (unteren) Eingang aufweist, dessen Eingangssignal von der Signalverarbeitung weiterer Bausteine abhängig ist. Das Resultat der vorab durchgeführten direkten Reihenfolgeermittlung ist in FIG 2 dargestellt. Die bereits vergebenen Reihenfolgenummern sind dabei jeweils in die obere linke Ecke der die Bausteine 4 darstellenden Kästchen eingetragen.

### II. Sortierung

Im nächsten Schritt werden alle Bausteine 4 bzgl. ihrer nachfolgenden Bearbeitung gewichtet. Die für diese Sortierung verwendeten Kriterien haben maßgeblichen Einfluss auf das Resultat der gesamten Reihenfolgeermittlung. Durch die Veränderung der Ordnungs- und Vergleichskriterien kann das Endergebnis demnach entsprechend modifiziert werden. Eine vorteilhafte Sortierung ergibt sich durch die Anwendung der folgenden Vergleichskriterien, wobei die Priorität der aufgeführten Bedingungen nach unten hin abnimmt. Das heißt: Das Vergleichskriterium b) findet nur dann Anwendung, falls zwei zu vergleichende Bausteine 4 bzgl. dem Vergleichskriterium a) identisch sind, usw.
a) Bausteine 4 mit bereits vergebener Reihenfolgenummer
b) Bausteine 4 mit einer Startkennung
c) Anzahl der eindeutig bestimmten Eingangssignale
d) eindeutige Bausteinnummer oder Position im Funktionsplan

Eine Startkennung nach Kriterium b) wird im Allgemeinen denjenigen Bausteinen 4 zugeteilt, die einen prozesssignaleinlesenden Eingang aufweisen. Die unter Punkt d) genannten Vergleichskriterien weisen eine vergleichsweise geringe Priorität auf und dienen lediglich dazu, die Reproduzierbarkeit des Verfahrens sicherzustellen (Determinismus). Im Ausführungsbeispiel ergibt sich unter der Voraussetzung, dass das planübergreifende Eingangssignal am Baustein A von einem anderen bereits verarbeiteten Funktionsplan bereitgestellt wird und somit gemäß Kriterium c) eindeutig bestimmt ist, die nachfolgende Sortierung:
F, G, A, H, B, C, D, E, I

### III. Verfolgung der Verschaltung

Gemäß der durch die Vorsortierung erhaltenen Reihenfolge werden nun die einzelnen Bausteine 4 bearbeitet, wobei folgende Fälle zu unterscheiden sind:
- Der betreffende Baustein 4 weist bereits eine Reihenfolgenummer auf. In diesem Fall kann sofort mit dem nächsten Baustein 4 fortgefahren werden. Im Ausführungsbeispiel trifft dies auf die Bausteine F und G zu.
- Andernfalls wird der betreffende Baustein 4 als Startbaustein definiert und der Signalweg unter Beachtung der Verzweigungsregeln in Vorwärtsrichtung verfolgt.

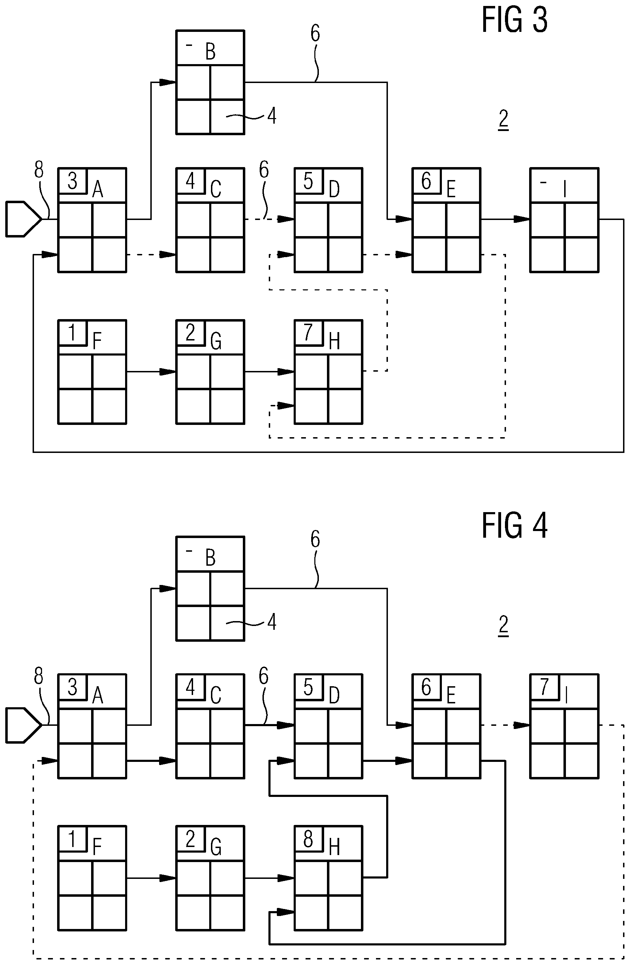

Beginnend mit Baustein A und unter Zugrundelegung der Regel, dass mehrere Ausgangsverbindungen eines Bausteins der Reihe nach von unten nach oben abgearbeitet werden, ergibt sich das in FIG 3 gezeigte Bild. Die Verfolgung des Signalwegs ist darin durch gestrichelte Linien veranschaulicht. Auf den Baustein A folgt C, dann D, anschließend E, H und wieder D. Da der Baustein D bereits zuvor angetroffen wurde, stoppt die Vorwärtspropagation bei dem Baustein H. Den im Verlauf der Signalverfolgung angetroffenen Bausteinen wird nun die folgende Sequenzliste zugeordnet. Konventionsgemäß (aber nicht notwendigerweise) werden dabei die Bausteine F und G mit bereits vergebener Bearbeitungsnummer vorangestellt:

F-G-A-C-D-E-H (L1)

Den in dieser Sequenzliste L1 angeordneten Bausteinen kann auch eine vorläufige Reihenfolgenummer zugeordnet werden. Dabei ist zum einen zu beachten, dass die Nummern 1 und 2 bereits vorab an die Bausteine F und G vergeben wurden, so dass die Nummerierung nun beim Baustein A mit 3 fortfährt. Zum anderen kann sich die vorläufige Nummerierung in den nachfolgenden Rekursionsschritten auch noch einmal ändern. Es ist auch möglich, auf die Vergabe vorläufiger Reihenfolgenummern zu verzichten und stattdessen nur in der nachfolgend beschriebenen Weise mit den Sequenzlisten zu arbeiten. Bei dieser Vorgehensweise werden die Reihenfolgenummern also erst anhand der endgültig sortierten und vollständigen Sequenzliste zugeteilt.

Der verfolgte Signalpfad wird nun in Rückwärtsrichtung zurückverfolgt, bis ein Baustein erreicht wird, der eine weitere noch nicht ausgewählte oder markierte Ausgangsverbindung aufweist. Im Ausführungsbeispiel ist dies der Baustein E mit einer weiteren Ausgangsverbindung zu Baustein I. Damit startet die Signalverfolgung in Vorwärtsrichtung ausgehend vom Baustein E erneut. Der verfolgte Signalweg ist in FIG 4 wiederum durch eine gestrichelte Linie dargestellt. Da der vom Baustein I erreichbare Baustein A bereits im Verlaufe des Verfahrens angetroffen wurde, stoppt die Vorwärtspropagation beim Baustein I. Damit besitzt die in diesem Iterationsschritt erhaltene Sequenzliste L1 lediglich ein einziges Listenelement, nämlich I. Die im vorherigen Durchgang erhaltene Sequenzliste wird aktualisiert, indem die neue Sequenzliste (in diesem Fall also nur der Baustein E) unmittelbar nach dem Baustein E in die vorherige Sequenzliste L1 eingereiht wird, wobei sich die Positionen der nachfolgenden Listenelemente (in diesem Fall um eins) nach hinten verschiebt. Die aktualisierte Sequenzliste sieht daher wie folgt aus:

F-G-A-C-D-E-I-H (L2)

Die entsprechend aktualisierte vorläufige Reihenfolge der Bausteine ist wiederum in FIG 4 eingetragen.

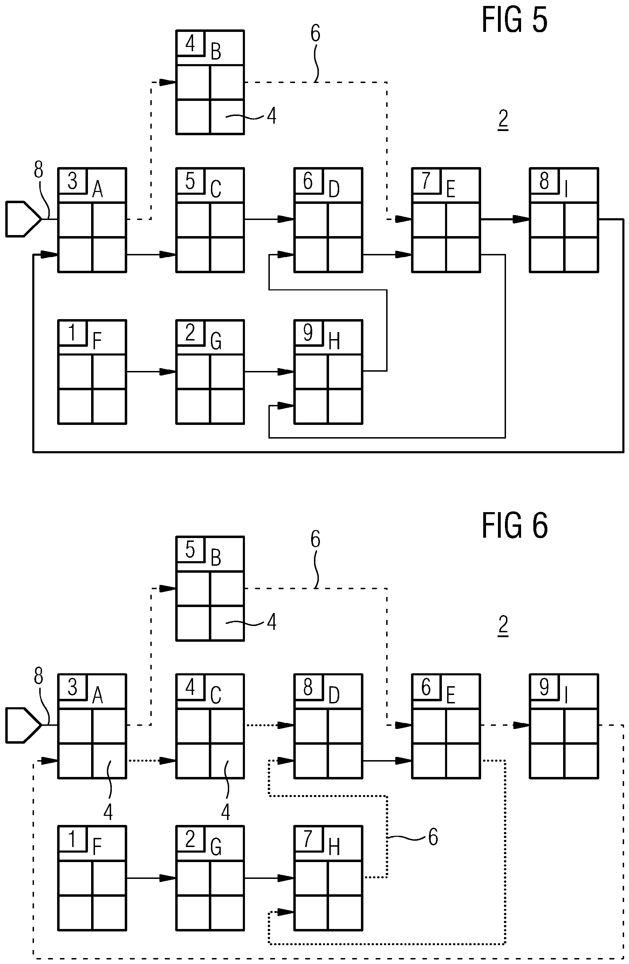

Es schließt sich eine weitere Propagationsphase in Rückwärtsrichtung an. Dies stoppt schließlich beim Baustein A, der noch eine zweite, bislang nicht verfolgte Ausgangsverbindung zu Baustein B aufweist. Die anschließende Vorwärtsbewegung endet gemäß FIG 5 bereits bei Baustein B. Der Baustein B wird in der zuletzt erhaltenen Sequenzliste L2 unmittelbar nach A eingeschoben, wobei sich wiederum die nachfolgenden Elemente nach hinten verschieben. Die erneut aktualisierte Sequenzliste hat somit schließlich die Gestalt:

F-G-A-B-C-D-E-I-H (L3)

Da alle Bausteine des Funktionsplans abgearbeitet wurden, stoppt das Verfahren. Abschließend ergibt sich das in FIG 5 gezeigte Bild, in dem in sämtliche Bausteine des Funktionsplans 2 die endgültig vergebenen Reihenfolgenummern eingetragen sind. Aufgrund der Rückkopplungen treten zwei Zyklusverzüge auf, nämlich beim Übergang von H nach D und von I nach A.

Für den Fall, dass mehrere Ausgangsverbindungen an einem Baustein in entgegengesetzter Richtung von oben nach unten abgearbeitet würden, würde sich das in FIG 6 gezeigte Ergebnis ergeben. Die resultierende Reihenfolge wäre in diesem Fall etwas modifiziert, die durch die Anzahl der Zyklusverzüge und die Einbeziehung bereits vorhandener Signale bestimmte Qualität jedoch unverändert.

Falls nach der vollständigen Abarbeitung aller Ausgänge des Startbausteins weitere, bislang noch nicht erreichte Bausteine existieren würden, so würde die Rekursionsprozedur gemäß der ursprünglichen (in Schritt II. des Verfahrens vorgenommenen) Sortierung mit dem nächsten noch nicht erreichten Baustein von vorne beginnen. Dies wäre auch nach einem vorzeitigen Abbruch der Rekursion beim Erreichen eines mit einer Startkennung versehenen Bausteins, also beispielsweise bei einem prozesssignaleinlesenden Baustein, der Fall.

### IV. Sonderfälle

Insbesondere bei komplexeren Funktionsplänen können im Rahmen der Reihenfolgeermittlung der Bausteine noch einige Sonderbehandlungen erforderlich sein. Beispielsweise kann bei einem Funktionsplan, der in Teilpläne segmentiert ist, festgelegt werden, ob ein Teilplan der einen mit einer Startkennung versehenen Baustein enthält, ebenfalls dieses Merkmal für die Ermittlung der Planreihenfolge erbt. Insbesondere erhalten prozesssignaleinlesende Bausteine durch die Zuteilung einer Startkennung eine höhere Priorität. Darüber hinaus gibt es für bestimmte Bausteine interne Abhängigkeiten, die sich ebenfalls in der Reihenfolge der Bearbeitung auswirken können. So gibt es beispielsweise bei Ablaufketten einen übergeordneten Kopfbaustein, der ausgangsseitig mit weiteren zugehörigen Schrittbausteinen auf demselben Funktionsplan verbunden ist. Dabei ist zu gewährleisten, dass der Kopfbaustein stets vor den Schrittbausteinen ausgeführt wird, da die nachverschalteten Schrittbausteine auf die vom Kopfbaustein generierten Signale angewiesen sind. Aus diesem Grund erhält ein derartiger Kopfbaustein ebenfalls eine Startkennung, die jedoch nicht an den zugehörigen Plan oder Teilplan vererbt wird, da die Abhängigkeit nur planintern wirksam ist.

Schließlich kann es auch noch erforderlich oder sinnvoll sein, die Abarbeitungsreihenfolge für bestimmte Pläne manuell zu beeinflussen, um z. B. unter Rückgriff auf empirisch gewonnenes Know-how die Sequenz der Bausteine vorteilhaft zu modifizieren.

## Patentansprüche

1. Verfahren zur Bestimmung der Bearbeitungsreihenfolge von Bausteinen (4) eines Funktionsplans (2) für ein sequentiell arbeitendes Automatisierungssystem, wobei
- jedem Baustein (4) in umkehrbar eindeutiger Weise eine Bausteinkennung (A, B, C, ..., I) zugeordnet ist,
- die Bausteine (4) signalseitig über Eingänge und Ausgänge verknüpft sind, und
- im Falle eines Bausteins (4) mit mehreren Ausgängen, diese Ausgänge jeweils in einer vorgegebenen Weise geordnet sind,
und
der Signalweg im Funktionsplan (2) ausgehend von einem Startbaustein in einer rekursiven Prozedur jeweils in Vorwärtsrichtung verfolgt wird und in Rückwärtsrichtung zurückverfolgt wird, wobei
- für eine Propagation in Vorwärtsrichtung und eine Propagation in Rückwärtsrichtung jeweils ein vorgegebener Satz von Propagationsregeln zugrunde gelegt wird,
- den im Verlauf einer Vorwärtspropagation erreichten Bausteinen (4) eine Sequenzliste zugeordnet wird, deren Listenelemente die Bausteinkennungen (A, B, C, ..., I) umfassen,
- in jedem Durchlauf durch eine Rekursionsschleife die nach dem vorherigen Durchlauf vorliegende Sequenzliste mittels einer aktuellen Sequenzliste aktualisiert wird, und
- wobei die Reihenfolge der Listenelemente in der nach Beendigung des Verfahrens vorliegenden Sequenzliste als Repräsentation für die Bearbeitungsreihenfolge der Bausteine (4) herangezogen wird,
- der Funktionsplan (2) in Teilpläne segmentiert ist, wobei die Reihenfolge der Teilpläne bei der Ermittlung der planinternen Bearbeitungsreihenfolge der Bausteine (4) berücksichtigt wird,
**dadurch gekennzeichnet,**
**dass** die Sequenzliste aktualisiert wird, indem die im aktuellen Durchgang durch die Rekursionsschleife erhaltene Sequenzliste in die vorherige Sequenzliste eingefügt wird, wobei die Einfügung unmittelbar hinter demjenigen Listenelement vorgenommen wird, das den Startpunkt der zuletzt erfolgten Vorwärtspropagation repräsentiert,
**dass** bei einer Rückwärtspropagation der im Verlauf der vorherigen Propagationsvorgänge in Vorwärtsrichtung eingeschlagene Propagationspfad zurückverfolgt wird und
**dass** eine Rückwärtspropagation abgebrochen wird, sobald der im aktuellen Propagationsschritt erreichte Baustein (4) der Startbaustein oder ein Baustein (4) mit einer im Verlauf der vorherigen Rekursionsschleifen noch nicht verfolgten Ausgangsverbindung ist.

2. Verfahren nach Anspruch 1,
**dadurch gekennzeichnet, dass**
bei einer Vorwärtspropagation beim Erreichen eines Bausteins (4) mit mehreren Ausgängen entsprechend der vorgegebenen Ordnung der Ausgänge der nächstmögliche Ausgang ausgewählt wird, der im Verlauf der vorher durchlaufenen Rekursionsschleifen noch nicht verfolgt wurde.

3. Verfahren nach Anspruch 1 oder 2,
**dadurch gekennzeichnet, dass**
eine Vorwärtspropagation abgebrochen wird, sobald im nächsten Propagationsschritt nach den vorgegebenen Propagationsregeln
- ein bereits im Verlauf des Verfahrens erreichter Baustein (4),
- ein Baustein (4) mit einer Startkennung oder mit einer bereits vorab vergebenen Reihenfolgenummer, oder
- ein Endbaustein ohne Ausgangsverbindungen oder mit nur externen Ausgängen
angetroffen würde.

4. Verfahren nach einem der Ansprüche 1 bis 3,
**dadurch gekennzeichnet, dass**
die Rekursionsschleife beendet wird, sobald alle vom Startbaustein (4) aus erreichbaren Bausteine (4) erreicht wurden.

5. Verfahren nach einem der Ansprüche 1 bis 4,
**dadurch gekennzeichnet, dass**
jeder bereits erreichte Baustein (4) und/oder jede bereits gewählte Ausgangsverbindung markiert wird.

6. Verfahren nach einem der Ansprüche 1 bis 5,
**dadurch gekennzeichnet, dass**
die Listenelemente in der Sequenzliste in derjenigen Reihenfolge angeordnet werden, welche der Reihenfolge entspricht, in der die Bausteine (4) beim Verfolgen des Signalpfades in Vorwärtsrichtung erreicht werden.

7. Verfahren nach einem der Ansprüche 1 bis 6,
**dadurch gekennzeichnet, dass**
allen Bausteinen (4) ohne Eingangsverbindung und allen Bausteinen (4), deren Eingangssignal eindeutig bestimmt ist, vorab eine Reihenfolgenummer in aufsteigender Reihenfolge zugeordnet wird.

8. Verfahren nach einem der Ansprüche 1 bis 7,
**dadurch gekennzeichnet, dass**
allen Bausteinen (4), die zum Einlesen von Prozesssignalen bestimmt sind, vorab eine Startkennung zugeordnet wird.

9. Verfahren nach einem der Ansprüche 1 bis 8,
**dadurch gekennzeichnet, dass**
die Bausteine (4) vor der Durchführung der rekursiven Prozedur nach ihrer Priorität geordnet werden, wobei eine Ordnungshierarchie zugrunde gelegt wird, die folgende Ordnungs-und Vergleichskriterien umfasst:
a) Bausteine (4) mit bereits vergebener Reihenfolgenummer,
b) Bausteine (4) mit einer Startkennung, und
c) Anzahl der eindeutig bestimmten Eingangssignale.

10. Verfahren nach Anspruch 9,
**dadurch gekennzeichnet, dass**
als Startbaustein für die rekursive Prozedur ein Baustein (4) mit einer möglichst hohen Priorität unter den Bausteinen (4) mit noch nicht vergebener Reihenfolgenummer ausgewählt wird.

11. Verfahren nach Anspruch 9 oder 10,
**dadurch gekennzeichnet, dass**
die Rekursionsprozedur solange wiederholt wird, bis alle Bausteine (4) des Funktionsplans (2) erreicht wurden, wobei nacheinander die Bausteine (4) in der Reihenfolge abnehmender Priorität als Startbausteine zugrunde gelegt werden.

12. Elektronische Datenverarbeitungsanlage mit einer Eingabeeinheit, einer Ausgabeeinheit und einer Verarbeitungseinheit, deren Komponenten für die Durchführung des Verfahrens nach einem der Ansprüche 1 bis 11 konfiguriert sind.

13. Elektronische Datenverarbeitungsanlage nach Anspruch 12, bei der das Verfahren in einer Speichereinheit als ausführbares Software-Programm hinterlegt ist.

14. Elektronische Datenverarbeitungsanlage nach Anspruch 12 oder 13, bei der das Software-Programm in der Programmiersprache Java implementiert ist.

## Claims

1. Method for determining the processing order of modules (4) in a function plan (2) for a sequentially operating automation system,
- each module (4) being assigned a module identifier (A, B, C, ..., I) in a reversibly unambiguous manner,
- the modules (4) being linked, on the signal side, by means of inputs and outputs, and
- in the case of a module (4) having a plurality of outputs, these outputs respectively being organized in a predefined manner,
and
the signal path in the function plan (2) being respectively traced in a recursive procedure in the forward direction starting from a starting module and being traced back in the reverse direction,
- a predefined set of propagation rules respectively being used as a basis for propagation in the forward direction and propagation in the reverse direction,
- the modules (4) which are reached during forward propagation being assigned a sequence list whose list elements comprise the module identifiers (A, B, C, ..., I),
- the sequence list available after the previous pass being updated during each pass through the recursion loop using the current sequence list, and
- the order of the list elements in the sequence list available after the method has been concluded being used as a representation of the processing order of the modules (4),
- the function plan (2) being segmented into partial plans, the order of the partial plans being taken into account when determining the plan-internal processing order of the modules (4),
in that the sequence list is updated by inserting the sequence list obtained in the current pass through the recursion loop into the previous sequence list, the insertion being effected immediately after that list element which represents the starting point of the forward propagation carried out last,
in that the propagation path pursued during the previous propagation operations in the forward direction is traced back during reverse propagation and
in that reverse propagation is aborted as soon as the module (4) reached in the current propagation step is the starting module or a module (4) having an output connection which has not yet been traced during the previous recursion loops.

2. Method according to Claim 1,
**characterized in that**
when a module (4) having a plurality of outputs is reached during forward propagation, the next possible output which has not yet been traced during the previous recursion loops is selected according to the predefined order of outputs.

3. Method according to Claim 1 or 2,
**characterized in that**
forward propagation is aborted as soon as
- a module (4) which has already been reached during the method,
- a module (4) having a start identifier or an order number which has already been allocated in advance, or
- an end module without output connections or with only external outputs
has been found in the next propagation step in accordance with the predefined propagation rules.

4. Method according to one of Claims 1 to 3,
**characterized in that**
the recursion loop is ended as soon as all modules (4) which can be reached from the starting module (4) have been reached.

5. Method according to one of Claims 1 to 4,
**characterized in that**
each module (4) which has already been reached and/or each output connection which has already been selected is/are marked.

6. Method according to one of Claims 1 to 5,
**characterized in that**
the list elements in the sequence list are organized **in that** order which corresponds to the order in which the modules (4) are reached when tracing the signal path in the forward direction.

7. Method according to one of Claims 1 to 6,
**characterized in that**
all modules (4) without an input connection and all modules (4) whose input signal has been unambiguously determined are assigned an order number in ascending order in advance.

8. Method according to one of Claims 1 to 7,
**characterized in that**
all modules (4) which are intended to read in process signals are assigned a start identifier in advance.

9. Method according to one of Claims 1 to 8,
**characterized in that**
the modules (4) are organized according to their priority before the recursive procedure is carried out, an organization hierarchy which comprises the following organization and comparison criteria being used as a basis:
a) modules (4) having an order number which has already been allocated,
b) modules (4) having a start identifier, and
c) number of input signals which have been unambiguously determined.

10. Method according to Claim 9,
**characterized in that**
a module (4) having the highest possible priority among the modules (4) having an order number which has not yet been allocated is selected as the starting module for the recursive procedure.

11. Method according to Claim 9 or 10,
**characterized in that**
the recursion procedure is repeated until all modules (4) in the function plan (2) have been reached, the modules (4) being successively used as a basis as starting modules in the order of decreasing priority.

12. Electronic data processing system having an input unit, an output unit and a processing unit, the components of which are configured for carrying out the method according to one of Claims 1 to 11.

13. Electronic data processing system according to Claim 12, in which the method is stored in a memory unit in the form of an executable software program.

14. Electronic data processing system according to Claim 12 or 13, in which the software program is implemented using the programming language Java.

## Revendications

1. Procédé de détermination de la succession de traitement de module (4) d'un schéma (2) logique pour un système d'automatisation travaillant de manière séquentielle, dans lequel
- on affecte, à chaque module (4) une caractérisation (A, B, C, ..., I) de module de façon univoque de manière réversible,
- on combine les modules (4) du côté du signal par des entrées et des sorties et
- dans le cas d'un module (4) ayant plusieurs sorties, on ordonne ces sorties d'une façon donnée à l'avance,
et
on suit le trajet du signal dans le schéma (2) logique à partir d'un module de départ, suivant une procédure récursive, respectivement dans le sens vers l'avant et on le ressuit dans le sens vers l'arrière, dans lequel
- pour une propagation dans le sens vers l'avant et une propagation dans le sens vers l'arrière, on met respectivement un jeu donné à l'avance de règles de propagation,
- au module (4) atteint au cours d'une propagation vers l'avant, on affecte une liste de séquences dont les éléments comprennent les caractérisations (A, B, C, ..., I) de module,
- à chaque passage par une boucle de récursion, on met à jour, au moyen d'une liste de séquences mise à jour, la liste de séquences présente après le passage précédent et
- dans lequel on tire parti, comme représentation de la succession de traitement des modules (4), de la succession des éléments de la liste de séquences présente à l'achèvement du procédé,
- le schéma (2) logique est segmenté en des sous-schémas, dans lequel on tient compte de la succession des sous-schémas lors de la détermination de la succession de traitement interne au schéma des modules (4),
**caractérisé**
**en ce que** l'on met à jour la liste de séquences, en insérant dans la liste de séquences précédente, la liste de séquences obtenue dans le passage présent dans la boucle de récursion, l'insertion étant effectuée directement derrière l'élément de la liste, qui représente le point de départ de la propagation vers l'avant effectuée en dernier,
**en ce que**, pour une propagation vers l'arrière, on ressuit le trajet de propagation parcouru dans le sens vers l'avant au cours des opérations de propagation précédentes, et en ce que l'on interrompt une propagation vers l'arrière dès que le module (4), atteint dans le stade de propagation présent, est le module de départ ou un module (4) ayant une liaison de sortie, qui n'a pas encore été suivie au cours des boucles de récursion précédentes.

2. Procédé suivant la revendication 1,
**caractérisé en ce que**
dans une propagation vers l'avant, lorsque l'on atteint un module (4) ayant plusieurs sorties, on choisit, conformément à l'ordre donné à l'avance des sorties, la sortie la plus près possible, qui n'a pas encore été suivie au cours des boucles de récursion parcourues précédemment.

3. Procédé suivant la revendication 1 ou 2,
**caractérisé en ce que**
l'on interrompt une propagation vers l'avant dès que, dans le stade immédiatement suivant de propagation, suivant les règles de propagation données à l'avance, on aurait rencontré
- un module (4) déjà atteint au cours du procédé,
- un module (4) ayant une caractéristique de départ ou un numéro d'ordre déjà donné auparavant ou
- un module de fin, sans liaison de sortie ou ayant des sorties seulement extérieures.

4. Procédé suivant l'une des revendications 1 à 3,
**caractérisé en ce que**
l'on met fin à la boucle de récursion dès que tous les modules (4) pouvant être atteints à partir du module (4) de départ ont été atteints.

5. Procédé suivant l'une des revendications 1 à 4,
**caractérisé en ce que**
l'on repère chaque module (4) déjà atteint et/ou chaque liaison de sortie déjà choisie.

6. Procédé suivant l'une des revendications 1 à 5,
**caractérisé en ce que**
l'on ordonne les éléments de la liste de séquences dans la succession, qui correspond à la succession dans laquelle les modules (4) sont atteints, lorsque l'on suit le trajet du signal dans le sens vers l'avant.

7. Procédé suivant l'une des revendications 1 à 6,
**caractérisé en ce que**
l'on affecte tous les modules (4), sans liaison d'entrée, et tous les modules (4), dont le signal d'entrée est déterminé de manière univoque, à l'avance d'un numéro d'ordre dans l'ordre croissant.

8. Procédé suivant l'une des revendications 1 à 7,
**caractérisé en ce que**
l'on affecte à l'avance une caractérisation de départ à tous les modules (4), qui sont destinés à la lecture de signaux de processus.

9. Procédé suivant l'une des revendications 1 à 8,
**caractérisé en ce que**
l'on ordonne, suivant leur priorité, les modules (4) avant d'effectuer la procédure récursive, en mettant une hiérarchie d'ordonnancement, qui comprend les critères d'ordonnancement et de comparaison suivantes :
a) module (4) ayant un numéro d'ordre déjà donné,
b) module (4) sans caractérisation de départ,
c) nombre des signaux d'entrée déterminés de manière univoque.

10. Procédé suivant la revendication 9,
**caractérisé en ce que**
l'on choisit, comme module de départ, pour la procédure récursive, un module (4) ayant une priorité aussi grande que possible parmi les modules (4) ayant un numéro d'ordre, qui n'est pas encore donné.

11. Procédé suivant la revendication 9 ou 10,
**caractérisé en ce que**
l'on répète la procédure de récursion jusqu'à ce que tous les modules (4) aient atteint le schéma logique, les modules (4) étant mis les uns après les autres, comme modules de départ, suivant la priorité décroissante dans l'ordre.

12. Système électronique de traitement de données ayant une unité d'entrée, une unité de sortie et une unité de traitement, dont les composants sont configurés pour effectuer le procédé suivant l'une des revendications 1 à 11.

13. Système électronique de traitement de données suivant la revendication 12, dans lequel le procédé est mémorisé dans une unité de mémoire, comme programme de logiciel pouvant être exécuté.

14. Système électronique de traitement de données suivant la revendication 12 ou 13, dans lequel le programme de logiciel est mis en oeuvre dans la langue de programmation Java.
